# EUROPEAN PATENT APPLICATION

(11) **EP 2 549 600 A1**
(43) Date of publication of application: **23.01.2013**
(21) Application number: 11755735.5
(22) Date of filing: 17.03.2011
(51) Int. Cl.: H02G 3/04, F16L 11/02

(54) **PROTECTIVE TUBE**

(30) Priority: 17.03.2010 EP 10382059
(71) Applicant: Relats, S.A., 08140 Caldes de Montbui (ES)
(72) Inventor: RELATS CASAS, Pere, E-08140 Caldes de Montbui (ES); FRUNS MARTÍN, Anna, E-08140 Caldes de Montbui (ES); ARTOLA SOLÉ, Dolors, E-08140 Caldes de Montbui (ES); RELATS MANENT, Jordi, E-08140 Caldes de Montbui (ES)
(74) Representative: Ponti Sales, Adelaida
(86) International application number: PCT/ES2011/070182
(87) International publication number: WO 2011/113985

(57) **Abstract**

The protection tube comprises a plurality of threads braided together or interwoven, and is characterised in that at least part of said threads comprises hot melt material. At least part of said threads is impregnated in said hot melt material or is made of hot melt material.

It allows the protection tube to be joined, totally or partially, to the element to be protected without requiring the use of any additional element.

## Description

The present invention relates to a protection tube, in particular for protecting cables, which is secured at one end, at both ends or across the entire length of the element to be protected.

### BACKGROUND OF THE INVENTION

In the state of the art the use of protection tubes over elongated elements, for example car cables, is known.

These protection tubes are made of a number of threads braided or knitted together, in such a way that they provide appropriate mechanical and thermal protection.

One problem with the installation of these protection tubes is that they can move in respect of the elongated element it protects over the course of time.

One solution for this problem is described, for example, in patent EP-A-0 784 181. This patent describes a braided sheath sleeve which includes a certain quantity of adhesive between the filaments of one expanded end of the sheath and which is surrounded by a joint made of hot shrink plastic material.

To secure the expanded end to the element to be protected a shaping mandrel must be placed and heat applied to said end in such a way that the adhesive melts and the joint is secured.

This sheath presents the disadvantage of requiring an additional element aside from the sheath itself, the joint, to allow it to be secured to the element to be protected, which represents an additional cost.

Therefore, there is an evident need for a protection tube that can be secured to the element to be protected in a faster and simpler manner, without needing to incorporate elements that do not form part of the protection tube itself.

### DESCRIPTION OF THE INVENTION

With the protection tube of the invention the aforesaid disadvantages are resolved, presenting further advantages which are described below.

The protection tube of the present invention comprises a plurality of threads braided together or interwoven, and is characterised in that at least part of said threads comprises a heat shrink material, in other words, there are the following options:
- for all or some of the threads to be coated or impregnated in a heat shrink material;
- for some of the threads to be fully made of a heat shrink material, which can also be impregnated in said material.

Thanks to this characteristic, to join the protection tube, totally or partially, to the element to be protected it is not necessary to use any additional element.

According to a first embodiment, at least part of said threads is impregnated with said hot melt material. Preferably, all threads are impregnated with said hot melt material. In such case, said hot melt material is preferably a hot melt resin or adhesive, or any suitable material. For example, said hot melt resin or adhesive may be a polyurethane-based adhesive.

According to an alternative embodiment, at least part of said threads is made of a hot melt material. In this case, said hot melt material is synthetic rubber, or polyethylene, polypropylene, polyamide or polyester, with a low melt point.

### DESCRIPTION OF PREFERRED EMBODIMENTS

Below is a description of preferred embodiments of the protection tube of the present invention by way of a non-limiting example.

According to a first embodiment, the protection tube of the present invention is a braided thread tube manufactured according to the following parameters:
- Number of spools: 32;
- Threads per spool: 2;
- Density: 25 stitches in 3 cm;
- Type of thread: PET monofilament 0.22 mm black;
- Type of resin for finishing: Heat activated adhesive with a polyurethane base and in aqueous medium (40% solids content), traded under the name Morchem 5152 HR;
- Finishing process: by immersion;
- Application model: on a polyamide gasoline tube with an 8 mm diameter, the impregnated cover was applied and dried in a stove during 30 seconds at 150°C;
- Conclusion: the tube is secured to the gasoline tube.

According to a second embodiment, the protection tube of the present invention can be carried out with a braiding machine in the following way:
1) 3 spindle heads of PET polyester of 0.22 mm and 1 spindle head of hot melt thread of 0.18 mm; and/or
2) 3 spindle heads of PET polyester of 0.22 mm.

All bobbins may be according to option 1) or may be 25% according to option 1) and the remaining 75% according to option 2), and any combination thereof.

The material of the protection tube may be polyester or any other plastic material with polyamide.

It must be stated that the protection tube of the present invention can be manufactured on circular gathering machines, circular warping machines, on braiding machines and on looms, using braiding, warp knitting, stitch gathering or fabric weaving techniques.

Also, the materials of the threads may be any plastic fibre, for example polyamide or polyester.

The method used for heating and shrinking the tube can be any conventional method, for example, by means of hot air, infrared beam radiation, heat radiation, etc.

It must also be pointed out that the joint between the protection tube of the present invention and the element to be protected can be at one of its ends, at both ends, or across the entire length of the protection tube.

Despite the fact that reference has been made to a specific embodiment of the invention, it is obvious for the person skilled in the art that the described protection tube can be subject to numerous variations and modifications, and that all the details mentioned can be replaced by other technical equivalents, without departing from the scope of the protection defined by the attached claims.

## Claims

1. Protection tube, comprising a plurality of braided or interwoven threads, **characterised in that** at least part of said threads comprise a hot melt material.

2. Protection tube according to claim 1, wherein at least part of said threads is impregnated in said hot melt material.

3. Protection tube according to claim 1, wherein at least part of said threads is made of a hot melt material.

4. Protection tube according to claim 1 or 2, wherein said hot melt material is a hot melt resin.

5. Protection tube according to claim 1 or 3, wherein said hot melt material is synthetic rubber, or polyethylene, polypropylene, polyamide or polyester, with a low melt point.

6. Protection tube according to claim 2, wherein all of the threads are impregnated in said hot melt material.

7. Protection tube according to claim 4, wherein said hot melt resin is a polyurethane-based adhesive.
